# EUROPÄISCHE PATENTANMELDUNG

(11) **EP 4 201 560 A1**
(43) Veröffentlichungstag der Anmeldung: **28.06.2023**
(21) Anmeldenummer: 22194357.4
(22) Anmeldetag: 07.09.2022
(51) Int. Cl.: B23B 31/00, B23B 31/11, B23C 5/08, B23C 5/26, B23C 5/28

(54) **WERKZEUGEINHEIT UND VERFAHREN**

(30) Priorität: 22.12.2021 CH 0707702021
(71) Anmelder: Alesa AG, 5707 Seengen (CH)
(72) Erfinder: BÖSIGER, Tim, 5734 Reinach (CH); FEHLMANN, Mathias, 5703 Seon (CH)
(74) Vertreter: Clerc, Natalia

(57) **Zusammenfassung**

Eine Werkzeugeinheit weist einen Werkzeughalter (1) und ein Werkzeug (2) auf, das lösbar mit dem Werkzeughalter (1) verbindbar ist. Der Werkzeughalter (1) weist ein erstes Kopplungsteil (13) und das Werkzeug (2) ein zweites Kopplungsteil (23) auf, wobei das erste Kopplungsteil (13) und das zweite Kopplungsteil (23) in Eingriff miteinander bringbar sind. Das erste Kopplungsteil (13) und das zweite Kopplungsteil (23) weisen kreisförmig angeordnete Erhöhungen (130, 230) und zwischen den Erhöhungen (130, 230) sich erstreckende Nuten (131, 231) auf, die Anschlagflächen (134, 234) ausbilden, wobei die Erhöhungen (130, 230) einen Kreis definieren mit einem Kreismittelpunkt (K). Jeweils je zwei Anschlagflächen (134, 234) des ersten Kopplungsteils (13) bzw. des zweiten Kopplungsteils (23) definieren eine gemeinsame Längsachse (L), die sich durch den Kreismittelpunkt (K) erstreckt. Die jeweils eine gemeinsame Längsachse (L) definierenden zwei Anschlagflächen (134, 234) sind gleich ausgerichtet. Die erfindungsgemässe Werkzeugeinheit weist eine optimierte Kopplung auf und ist gleichzeitig zeiteffizient und präzis herstellbar.

## Beschreibung

### TECHNISCHES GEBIET

Die vorliegende Erfindung betrifft eine Werkzeugeinheit, insbesondere eine Rotationswerkzeugeinheit. Sie betrifft ferner einen Werkzeughalter, ein Werkzeug sowie ein Verfahren zur Herstellung eines Werkzeughalters oder eines Werkzeugs.

### STAND DER TECHNIK

Bearbeitungswerkzeuge, wie beispielsweise Kreissägeblätter, sind üblicherweise mit einem Werkzeughalter lösbar verbindbar. Beide Bauteile weisen entsprechende Kopplungsteile auf, die ineinandergreifen. Die Verbindung ist üblicherweise mittels einer Schraube lösbar fixierbar.

WO 2016/127266 A1 offenbart ein Maschinenreibwerkzeug mit einem Wechselkopf und einem Schaft. Schaft und Wechselkopf weisen vertiefte Nuten und erhöhte Kämme auf, die gemeinsam ein Kreuz bilden. Die zwei Kopplungsteile von Schaft und Wechselkopf sind unterschiedlich ausgebildet.

EP 3 341 149 B1 zeigt eine Schneideplatte, die lösbar auf einem Schaft gehalten ist. Die Verbindung erfolgt über sechs sternförmig angeordnete Erhöhungen und Nuten. Auch bei dieser Verbindung sind die Kopplungsteile gegengleich, jedoch als Vater-Mutterteile und nicht identisch ausgebildet. Ferner weist das Kopplungsteil des Werkzeugs eine Bohrung und das Kopplungsteil des Werkzeughalters eine Nase zum Zentrieren auf.

EP 1 513 643 B1 zeigt ein Fräswerkzeug mit drei sternförmig angeordneten Nuten im ersten Kopplungsteil und entsprechende Kämme im zweiten Kopplungsteil.

Insbesondere bei spanenden Präzisionswerkzeugen ist die Kopplung zwischen Werkzeughalter und Werkzeug entscheidend für die Leistung und die Qualität des Präzisionswerkzeugs. Eine bessere Leistung zeichnet sich beispielsweise in grösseren Schnitttiefen und breiterem Sägen aus.

### DARSTELLUNG DER ERFINDUNG

Es ist deshalb eine Aufgabe der Erfindung, eine Werkzeugeinheit zu schaffen, die die Kopplung zwischen Werkzeugaufnahme und Werkzeug verbessert.

Diese Aufgabe löst eine Werkzeugeinheit mit den Merkmalen des Patentanspruchs 1, ein Werkzeughalter mit den Merkmalen des Patentanspruchs 12, ein Werkzeug mit den Merkmalen des Patentanspruchs 13 sowie ein Verfahren zur Herstellung gemäss Patentanspruch 14.

Die erfindungsgemässe Werkzeugeinheit weist einen Werkzeughalter und ein Werkzeug auf, das lösbar mit dem Werkzeughalter verbindbar ist. Der Werkzeughalter weist ein erstes Kopplungsteil und das Werkzeug ein zweites Kopplungsteil auf, wobei das erste Kopplungsteil und das zweite Kopplungsteil in Eingriff miteinander bringbar sind. Das erste Kopplungsteil und das zweite Kopplungsteil weisen kreisförmig angeordnete Erhöhungen und zwischen den Erhöhungen sich erstreckende Nuten auf, die Anschlagflächen ausbilden. Die Erhöhungen definieren einen Kreis mit einem Kreismittelpunkt. Erfindungsgemäss definieren jeweils zwei Anschlagflächen des ersten Kopplungsteils eine gemeinsame erste Längsachse, die sich durch den Kreismittelpunkt erstreckt, wobei die jeweils eine gemeinsame erste Längsachse definierenden zwei Anschlagflächen gleich ausgerichtet sind. Jeweils zwei Anschlagsflächen des zweiten Kopplungsteils definieren eine gemeinsame zweite Längsachse, die sich durch den Kreismittelpunkt erstreckt, wobei die jeweils eine gemeinsame zweite Längsachse definierenden zwei Anschlagflächen gleich ausgerichtet sind.

Die Werkzeugeinheit ist insbesondere eine Präzisionswerkzeugeinheit, vorzugsweise eine Rotationswerkzeugeinheit, beispielsweise eine Kreissäge oder ein Fräser. Sie kann jedoch auch ein Drehwerkzeug oder eine andere Art Werkzeug aufweisen.

Die Längsachse ist vorzugsweise die Längsmittelachse der Anschlagflächen. Je nach Ausführungsform erstrecken sich die Anschlagflächen über die gesamte Höhe der seitlichen Flanken der Nut oder sie erstrecken sich lediglich über einen Teil der Höhe. Vorzugsweise bilden mindestens die oberen Bereiche der Flanken die Anschlagflächen aus.

Dank der erfindungsgemässen Ausrichtung der Anschlagflächen lassen sich alle Anschlagflächen des ersten Kopplungsteils mit demselben Bearbeitungswerkzeug, insbesondere mit demselben Schleifwerkzeug, bearbeiten, wobei hierzu lediglich eine Drehung um eine Kreismittelachse des Kopplungsteils notwendig ist. D.h. dass das Kopplungsteil und das Schleifwerkzeug während der Bearbeitung lediglich relativ zueinander gedreht, jedoch nicht verschoben werden müssen. Dies erhöht die Präzision bei der Herstellung der Anschlagflächen und verkürzt zudem die Herstellungszeit. Vorzugsweise sind die gesamten Flanken derart ausgebildet, dass sie sich mit demselben Bearbeitungswerkzeug bearbeiten lassen. Somit lassen sich nicht nur die Anschlagflächen wie oben beschrieben bearbeiten, sondern die gesamten Flanken. Dies verkürzt die Herstellungszeit zusätzlich. Je nach Ausführungsform lassen sich Flanken und Anschlagflächen mit demselben Bearbeitungswerkzeug und vorzugsweise in einem einzigen Bearbeitungsschritt herstellen. In anderen Ausführungsformen werden zuerst die Flanken ausgebildet und anschliessend in einem zweiten Bearbeitungsschritt und evtl. mit einem anderen Bearbeitungswerkzeug die Anschlagflächen nachbearbeitet.

Dieselben Herstellungsschritte gelten auch für das zweite Kopplungsteil. Hierzu lassen sich je nach Ausbildung des zweiten Kopplungsteils dieselben Bearbeitungswerkzeuge verwenden wie für das erste Kopplungsteil oder es werden andere Bearbeitungswerkzeuge in derselben Art und Weise verwendet wie oben beschrieben.

Ein weiterer Vorteil ist, dass sich die einander bezüglich des Kreismittelpunkts gegenüberliegenden Anschlagfläche bzw. Flanken paarweise und somit gemeinsam herstellen und bearbeiten lassen. Auch dies verkürzt die Produktionszeit der Werkzeugeinheit und verringert die Herstellungskosten. Des Weiteren ist die Präzision bei der Herstellung der Werkzeugeinheit erhöht, da dasselbe Schleifwerkzeug gleichzeitig für zwei Anschlagflächen bzw. Flanken gemeinsam verwendet werden kann, ohne dass es versetzt werden muss.

Ein präzises Herstellungsverfahren der Anschlagflächen ermöglicht, dass möglichst alle Erhöhungen, auch Nocken genannt, bei der Verwendung der Werkzeugeinheit das Drehmoment übertragen. Die Kopplung ist optimiert und die Werkzeugeinheit kann mit hoher Präzision verwendet werden.

Zudem wirkt dank der erfindungsgemässen Ausrichtung der Anschlagflächen die Kraft eines auf das Werkzeug wirkenden Drehmoments bei Verwendung der Werkzeugeinheit stets senkrecht auf die Anschlagflächen. Es ergeben sich keine störenden Kräfte.

Die Anschlagfläche des ersten Kopplungsteils und die Anschlagfläche des zweiten Kopplungsteils ermöglichen vorzugsweise eine Flächenberührung. Eine Flächenberührung hat gegenüber einer Linienberührung den Vorteil, dass durch weniger Flächenpressung die Kopplung weniger schnell einläuft und somit die Präzision bei hohen Bearbeitungskräften bei Benützung der Werkzeugeinheit erhöht ist.

Vorzugsweise ist eine ungerade Anzahl kreisförmig angeordneter Nocken bzw. Erhöhungen und Nuten auf jedem Kopplungsteil vorhanden. Vorzugsweise ist die Anzahl Erhöhungen bzw. Nuten mindestens sieben. Es hat sich gezeigt, dass mit genau sieben kreisförmig angeordneten Erhöhungen und sieben dazwischenliegenden Nuten auf jedem Kopplungsteil ein optimales Ergebnis erzielt ist.

Ein weiterer Vorteil der erfindungsgemässen Anordnung der Flanken ist, dass das erste und das zweite Kopplungsteil bezüglich Erhöhungen und/oder Nuten und/oder Flanken bzw. Anschlagflächen gleich ausgebildet sein können. In bevorzugten Ausführungsformen sind die Erhöhungen und die Nuten zumindest in ihrer Breite gleich und die Anschlagflächen beider Kopplungsteile sind zumindest in ihrer Neigung gleich ausgebildet. Sie bilden somit keine Vaterstücke und Mutterstücke, sondern sie sind beides gleichzeitig.

Ein weiterer Vorteil der erfindungsgemässen Anordnung der Anschlagflächen bzw. Flanken ist, dass die jeweils eine gemeinsame Längsachse definierenden zwei Anschlagflächen und je nach Ausführungsform der restliche Bereich ihrer Flanken mit demselben Schleifwerkzeug auf derselben Schleifbahn bearbeitbar sind. Vorzugsweise werden die Werkzeugaufnahme und das Werkzeug auf diese Art und Weise hergestellt.

Ein weiterer Vorteil der erfindungsgemässen Anordnung ist, dass beim Schleifen der zwei Flanken einer Nut kein Restmaterial am äusseren Rand des Nutbodens stehen bleibt. Ein Nachbearbeiten des Kopplungsteils ist somit nicht notwendig. Ferner lassen sich dadurch die Flanken und somit die Anschlagflächen in radialer Richtung länger ausbilden. Auch dies verbessert die Kopplung.

In einigen bevorzugten Ausführungsformen wird kein Kühlmittel verwendet und/oder es ist ist kein Kühlmittelkanal vorhanden. In bevorzugten Ausführungsformen weist mindestens eine der Nuten des ersten Kopplungsteils eine Auslassöffnung eines Kühlmittelkanals auf. Dies ermöglicht eine verbesserte Kühlung des Werkzeugs. Das Kühlmittel ist üblicherweise eine Emulsion aus Wasser und wassermischbaren Kühlschmierstoffen oder mit Schmiermittel versetzte Druckluft.

Vorzugsweise weisen mehrere Nuten, vorzugsweise alle Nuten, des ersten Kopplungsteils derartige Auslassöffnungen auf, wobei ihre Kühlmittelkanäle in einen gemeinsamen Zuführkanal im Innern des Werkzeughalters münden. Dies ermöglicht eine gleichmässige Verteilung des Kühlmittels.

Kühlmittelkanäle mit Auslassöffnungen, die in den Nutenböden bzw. Tälern der Kopplungsteile angeordnet sind, lassen sich auch in anderen Arten von Kopplungsteilen verwenden. Dies wird deshalb hiermit als separate Erfindung beansprucht.

Werkzeughalter und Werkzeug lassen sich auf unterschiedliche Art und Weise gegenseitig fixieren. In einer bevorzugten Ausführungsform weist das zweite Kopplungsteil eine zentrale Durchgangsöffnung zur Durchführung eines Befestigungselements, vorzugsweise einer Schaube, auf. Das erste Kopplungsteil weist eine passsende zentrale Gewindeöffnung zur Aufnahme des Befestigungselements auf. In einer anderen Ausführungsform weisen mehrere, vorzugsweise alle Nuten des zweiten Kopplungsteils Durchlassöffnungen für Befestigungselemente auf und mehrere, vorzugsweise alle Erhöhungen des ersten Kopplungsteils weisen Gewindeöffnungen zur Aufnahme der Befestigungselemente auf. In einer weiteren Ausführungsform sind die Durchlassöffnungen in den Erhöhungen des zweiten Kopplungsteils angeordnet und die Gewindeöffnungen sind in den Nuten des ersten Kopplungsteils angeordnet. In einer weiteren Ausführungsform sind im ersten Kopplungsteil des Werkzeughalters Gewindeöffnungen in den Erhöhungen und zudem auch Verteilkanäle vorhanden, die in den Nuten münden.

Ein Werkzeughalter kann mit unterschiedlich geformten Werkzeugen verwendet werden. Auch kann ein Werkzeug auf unterschiedlichen Werkzeughaltern angeordnet sein. Der Werkzeughalter und die Werkzeuge sind deshalb als eigenständige Erfindungen beansprucht.

In einem erfindungsgemässen Verfahren zur Herstellung eines Werkzeughalters oder eines Werkzeugs mit einem Kopplungsteil, insbesondere eines oben genannten Werkzeughalters oder eines oben genannten Werkzeugs werden im Werkzeughalter bzw. im Werkzeug kreisförmig angeordnete Nuten eingebracht mit Flanken, die mindestens über einen Teilbereich Anschlagflächen ausbilden. Zwecks Ausbildung der Anschlagflächen einer ersten Nut wird ein Bearbeitungswerkzeug entlang einer Längsachse bewegt, die sich durch einen Kreismittelpunkt erstreckt, wobei das Bearbeitungswerkzeug zwecks Ausbildung von Anschlagflächen in einer der ersten Nut benachbarten zweiten Nut um eine Drehachse gedreht wird, die senkrecht zur Längsachse durch den Kreismittelpunkt verläuft.

Vorzugsweise werden je zwei Anschlagflächen, die eine gemeinsame Längsachse, vorzugsweise eine Längsmittelachse, aufweisen, gemeinsam ausgebildet.

Weitere Ausführungsformen sind in den abhängigen Ansprüchen angegeben.

### KURZE BESCHREIBUNG DER ZEICHNUNGEN

Bevorzugte Ausführungsformen der Erfindung sind im Folgenden anhand der Zeichnungen beschrieben, die lediglich der Erläuterung dienen und nicht einschränkend auszulegen sind. In den Zeichnungen zeigen:
- Figur 1: eine perspektivische Darstellung einer erfindungsgemässen Werkzeugeinheit und eines Schafts in Explosionsdarstellung gemäss einer ersten Ausführungsform;
- Figur 2: einen Teil gemäss Figur 1 in vergrösserter Darstellung;
- Figur 3: einen Teil eines erfindungsgemässen Werkzeugs gemäss Figur 1 in perspektivischer Darstellung,
- Figur 4: eine perspektivische Darstellung des gesamten Werkzeugs gemäss Figur 3;
- Figur 5: eine Ansicht des Werkzeugs gemäss Figur 4 von oben;
- Figur 6: eine perspektivische Darstellung eines Teils eines erfindungsgemässen Werkzeughalters gemäss Figur 1;
- Figur 7: eine Ansicht des Werkzeughalters gemäss Figur 6 von oben;
- Figur 8: einen Längsschnitt durch die Werkzeugeinheit gemäss Figur 1;
- Figur 9: einen Teil gemäss Figur 8 in vergrösserter Darstellung;
- Figur 10: eine Ansicht eines Teils einer zusammengefügten Werkzeugeinheit in vergrösserter Darstellung;
- Figur 11: eine perspektivische Darstellung einer erfindungsgemässen Werkzeugeinheit und eines Schafts im zusammengesetzten Zustand gemäss einer zweiten Ausführungsform;
- Figur 12: einen Teil der Werkzeugeinheit gemäss Figur 11 in einer Explosionsdarstellung;
- Figur 13: einen Längsschnitt durch einen Teil der Werkzeugeinheit gemäss Figur 11,
- Figur 14: eine perspektivische Darstellung eines Teils eines erfindungsgemässen Werkzeughalters gemäss Figur 11;
- Figur 15: eine Ansicht des Werkzeughalters gemäss Figur 14 von oben;
- Figur 16: eine perspektivische Darstellung eines erfindungsgemässen Werkzeugs gemäss Figur 11;
- Figur 17: eine Ansicht des Werkzeugs gemäss Figur 16 von oben und
- Figur 18: einen Teil des Werkzeugs gemäss Figur 16 in perspektivischer Darstellung.

Gleiche Teile sind mit gleichen Bezugszeichen angegeben.

### BESCHREIBUNG BEVORZUGTER AUSFÜHRUNGSFORMEN

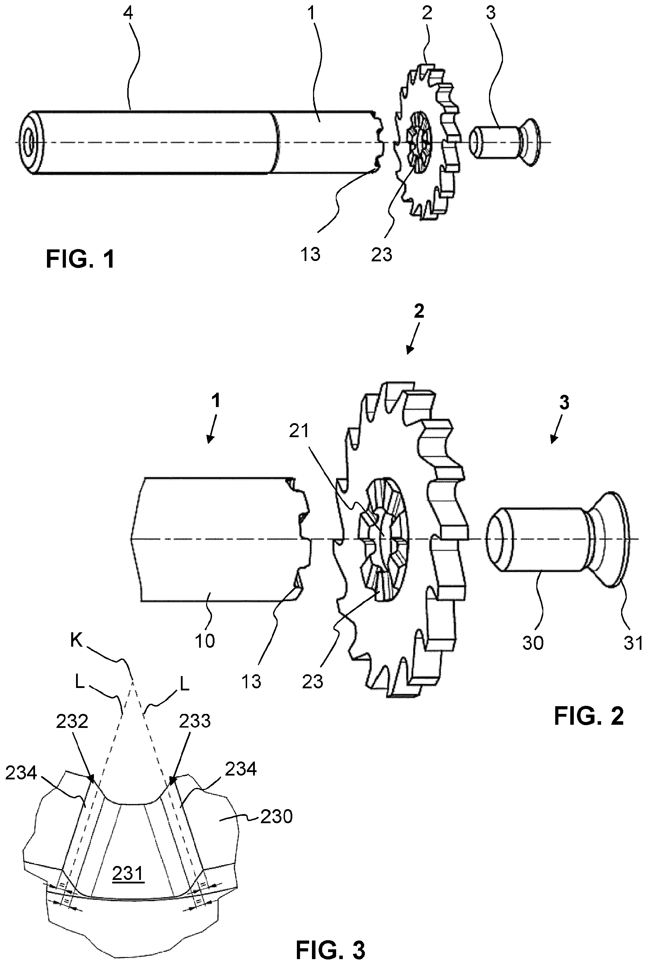

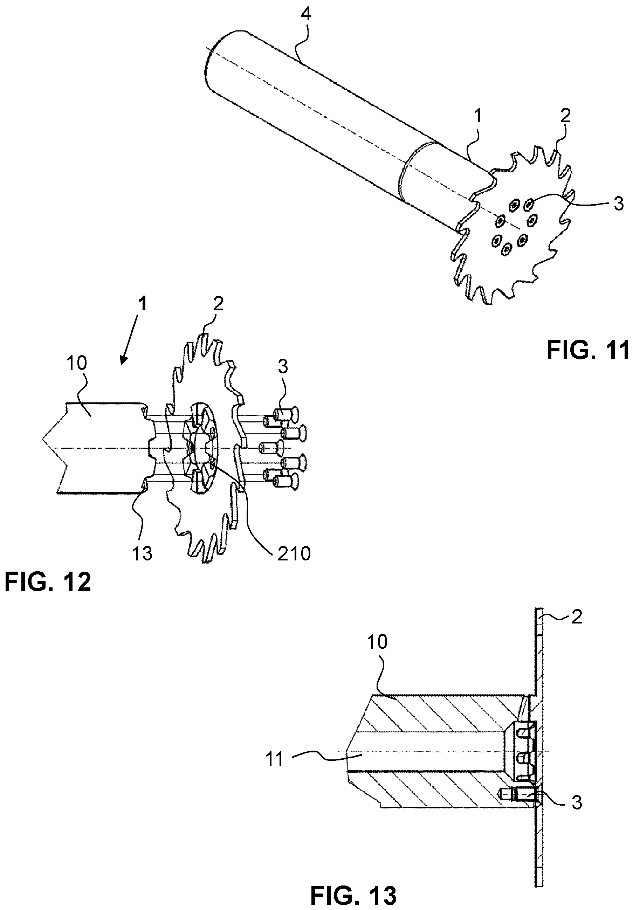

In den Figuren 1 bis 10 ist ein erstes Ausführungsbeispiel der erfindungsgemässen Werkzeugeinheit dargestellt und in den Figuren 11 bis 18 ein zweites Ausführungsbeispiel.

Die erfindungsgemässe Werkzeugeinheit gemäss Figur 1 weist einen Werkzeughalter 1, ein Werkzeug 2 und ein Befestigungselement 3 auf. Zwecks Kopplung der zwei Bauteile weist der Werkzeughalter 1 ein erstes Kopplungsteil 13 und das Werkzeug 2 ein zweites Kopplungsteil 23 auf.

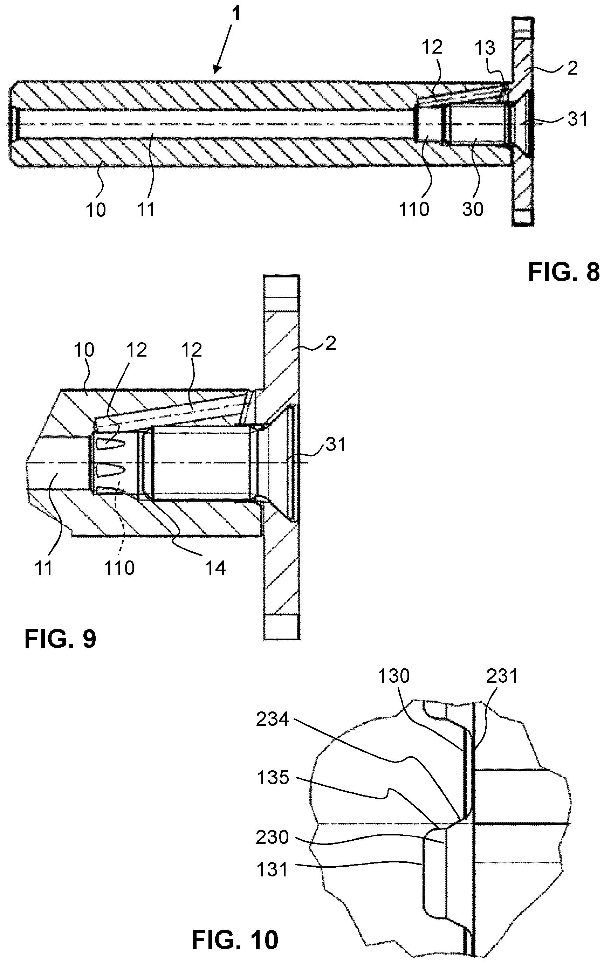

Das Befestigungselement 3 ist üblicherweise eine Schraube, deren Schraubenstift 30 durch eine Durchgangsöffnung 21 des Werkzeugs 2 in eine Gewindeöffnung 14 des Werkzeughalters 1 eingeschraubt werden kann und die mit ihrem Schraubenkopf 31 das Werkzeug 2 in Position hält. Die ist in den Figuren 2 und 8 gut erkennbar.

Der Werkzeughalter 1 lässt sich an einem Schaft 4 oder mit einer anderen Schnittstelle in einer Werkzeugmaschine befestigen, beispielsweise klemmen oder aufschrauben.

Im hier dargestellten Beispiel ist das Werkzeug 2 ein Kreissägeblatt. Es kann jedoch auch ein Fräser oder Drehwerkzeug sein. Die erfindungsgemässe Werkzeugeinheit ist vorzugsweise ein motorgetriebenes Rotationswerkzeug oder ein Drehwerkzeug.

Das Werkzeug 2 weist einen Grundkörper 20, hier ein Blatt, mit der zentralen Durchgangsöffnung 21 auf. Am Umfang sind schneidende und/oder abrasive Elemente angeordnet. In diesem Beispiel sind dies Sägezähne 22.

Das zweite Kopplungsteil 23 umgibt die zentrale Durchgangsöffnung 21. Es weist kreisförmig angeordnete Nocken oder Erhöhungen 230 und dazwischenliegende Täler oder Nuten 231 auf, die auf beiden Seiten der Erhöhungen 230 Flanken 232, 233 ausbilden. Vorzugsweise ist eine ungerade Anzahl Erhöhungen 230 und dieselbe ungerade Anzahl Nuten 231 vorhanden. Vorzugsweise sind es mindestens und noch bevorzugter genau sieben Erhöhungen 230 und sieben Nuten 231.

Die erste Flanke 232 einer Nut 231 bildet vorzugsweise das identische Gegenstück der zweiten Flanke 233 derselben Nut 231. D.h. sie weist denselben Neigungswinkel, jedoch in gegensätzlicher Richtung, und allenfalls dieselben Stufen, jedoch ebenfalls in gegensätzlicher Richtung, auf. Die Flanken 232, 233 sind somit bezüglich einer Längsmittelebene der Nut 231 und einer Längsmittelebene der Erhöhung 230 spiegelsymmetrisch. Alle Nuten 231 sind vorzugsweise identisch ausgebildet. Vorzugsweise sind auch alle Erhöhungen 230 gleich ausgebildet.

Figur 3 zeigt einen Ausschnitt mit einer Nut 231 des Werkzeugs 2. Die Flanken 232, 233 bilden über einen Teil ihrer Fläche, hier im gesamten oberen, nach oben offenen Bereich, je eine Anschlagfläche 234 aus.

Die Anordnung der Erhöhungen 230 und Nuten 231 ist derart, dass jede der Anschlagflächen 234 jeweils mindestens eine Längsachse L aufweist, die durch den Kreismittelpunkt K der Durchgangsöffnung 21 verläuft. Vorzugsweise ist diese Längsachse L jeweils die Längsmittelachse, wie in Figur 3 gezeigt ist. Die Längsmittelachse verläuft mittig in der Anschlagfläche 234.

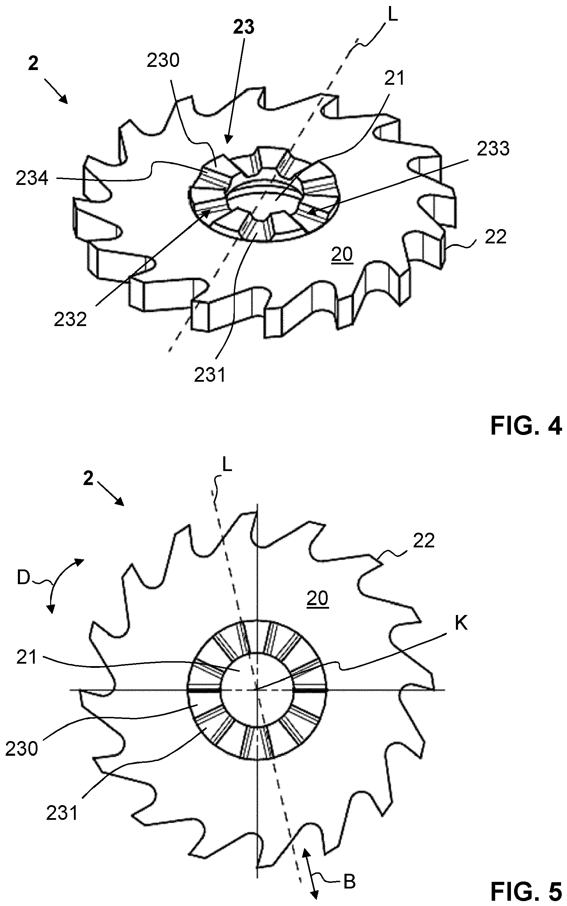

Wie in den Figuren 4 und 5 erkennbar ist, weisen zwei Anschlagflächen 234 zweier unterschiedlicher Nuten 231 jeweils eine gemeinsame Längsachse L bzw. Längsmittelachse auf. Jede Anschlagfläche 234 hat diesbezüglich eine benachbarte Anschlagfläche 234 einer anderen Nut 231, die diagonal auf der anderen Seite des Kreismittelpunktes K liegt. Diese zwei Anschlagflächen 234 lassen sich gleichzeitig mit demselben Bearbeitungswerkzeug, vorzugsweise mit derselben Schleifscheibe bearbeiten. Die Bearbeitungsrichtung bzw. die Schleifbahn ist in Figur 5 mit einem Doppelpfeil und dem Bezugszeichen B versehen. Durch Drehen des Werkzeugs 2 in Drehrichtung D gemäss dem gebogenen Doppelpfeil lassen sich somit sämtliche Anschlagflächen 234 bearbeiten bzw. herstellen, ohne dass das Bearbeitungswerkzeug, beispielsweise die Schleifscheibe, relativ zum Werkzeug 2 verschoben werden muss. Zudem muss im Falle von sieben Nuten und Erhöhungen lediglich sieben Mal durchgeschliffen werden, um sämtliche Anschlagflächen 234 herzustellen bzw. zu bearbeiten.

Sind die gesamten Flanken 232, 233 und nicht nur der die Anschlagflächen 234 bildende Teil der Flanken 232, 233 gleich ausgebildet, lassen sich auch sämtliche Flanken 232, 233 und sämtliche Nuten 231 auf diese Weise und vorzugsweise mit demselben Bearbeitungswerkzeug herzustellen.

Wie in den Figuren 4 und 5 erkennbar ist, ist das zweite Kopplungsteil 23 vorzugsweise einteilig mit dem Grundkörper 20 ausgebildet. Vorzugsweise sind die Nuten 231 fluchtend oder erhöht zur Oberfläche des Grundkörpers 20 ausgebildet. Dies erleichtert die Herstellung des zweiten Kopplungsteils 23.

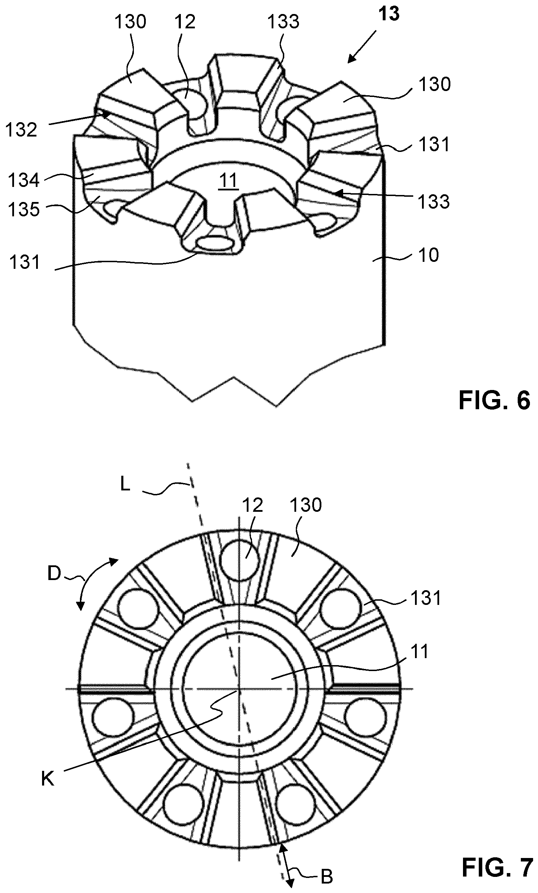

In den Figuren 6 und 7 ist das erste Kopplungsteil 13 des Werkzeughalters 1 dargestellt. Auch das erste Kopplungsteil 13 weist Erhöhungen 130 und Nuten 131 auf, die Flanken 132, 133 mit Anschlagflächen 134 ausbilden. Es gilt das zum zweiten Kopplungsteil 23 Gesagte, soweit es nachfolgend nicht ergänzt oder in den Figuren erkennbar ist.

Das erste Kopplungsteil ist im Wesentlichen als identisches Gegenstück zum zweiten Kopplungsteil 23 des Werkzeugs 2 ausgebildet. Es weist die gleich breiten Erhöhungen 130, die gleich breiten Nuten 131 und gleich geneigte Anschlagflächen 134 der Flanken 132, 133 auf. Lediglich der untere Bereich 135 der Flanken 132, 133 ist vorzugsweise zurückversetzt oder mehr zurückversetzt und die Nuten 121 sind vorzugsweise tiefer ausgebildet. Ferner sind die Böden der Nuten 131 vorzugsweise zum Kreismittelpunkt K hin geneigt ausgebildet. Das zum zweiten Kopplungsteil 23 Vorgetragene trifft auch auf das erste Kopplungsteil 13 zu.

In den Figuren 8 und 9 ist die zusammengesetzte Werkzeugeinheit dargestellt. Der Werkzeughalter 1 weist einen schaftförmigen Grundkörper 10 auf, der von einem Zuführkanal 11 zur Zuführung eines Kühlmittels durchsetzt ist. Als Kühlmittel eignet sich beispielsweise eine Emulsion aus Wasser und wassermischbaren Kühlschmierstoffen oder mit Schmiermittel versetzte Druckluft. Der Zuführkanal 11 endet in einer Verteilkammer 110, von welcher mehrere Kühlmittelkanäle, hier Verteilkanäle 12 genannt, zur Stirnseite des Grundkörpers 10 führen. Die Stirnseite bildet das erste Kopplungsteils 13. Jeder Verteilkanal 12 endet in einer Nut 131 des ersten Kopplungsteils 13. Dies ist in den Figuren 6 bis 9 gut erkennbar.

Die Flanken 132, 133, 232, 233 der Nuten 131, 231 bilden im oberen Bereich Anschlagflächen 134, 234 auf. Mindestens die Flanken 132, 133 der ersten Nut 131 sind vorzugsweise im unteren Bereich 135 zurückversetzt. In Figur 10 ist dies gut erkennbar. Die Anschlagflächen 134 dienen der Kopplung, die zurückversetzten oder ausgesparten Bereiche 135 bieten Raum für das Kühlmittel.

Das zweite Ausführungsbeispiel gemäss den Figuren 11 bis 18 ist im Wesentlichen gleich ausgebildet wie das erste Ausführungsbeispiel gemäss den Figuren 1 bis 10. Es gilt somit das dort Gesagte, falls nachstehend oder in den Figuren keine Unterschiede erkennbar sind.

Im zweiten Ausführungsbeispiel gemäss Figur 11 weist das Werkzeug 2 keine zentrale Durchgangsöffnung 21, sondern mehrere Durchgangsöffnungen 210 auf, die vorzugsweise kreisförmig angeordnet sind. Der erste Werkzeughalter 1 weist entsprechend mehrere kreisförmig angeordnete Gewindeöffnungen 14 auf. Der zentrale Bereich des Werkzeugs 2, d.h. der Bereich, der von den kreisförmig angeordneten Durchgangsöffnungen 210 umschlossen ist, ist vorzugsweise Teil des Grundkörpers 20. Vorzugsweise ist der zentrale Bereich planparallel ausgebildet. Die Durchgangsöffnungen 210 und die Gewindeöffnungen 14 fluchten miteinander. In sie eingeführte Befestigungselemente 3, vorzugsweise Befestigungsschrauben, fixieren das Werkzeug 2 auf dem Werkzeughalter 1.

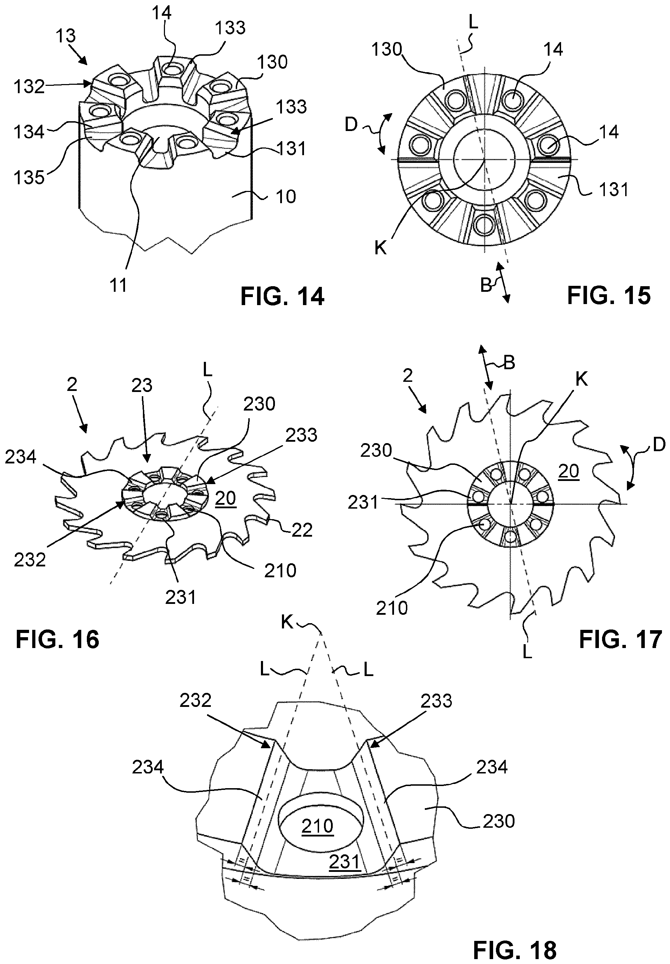

Vorzugsweise sind die Durchgangsöffnungen 210 in den Nuten 231 des Werkzeugs 2 und die Gewindeöffnungen 14 in den Erhöhungen 130 des Werkzeughalters 1 angeordnet. Vorzugsweise sind gleich viele Durchgangsöffnungen 210 und Gewindeöffnungen 14 vorhanden, wie es Nuten 231 bzw. Erhöhungen 130 gibt. Vorzugsweise sind wie im ersten Ausführungsbeispiel genau sieben Nuten 231 und Erhöhungen 130 vorhanden. Somit sind in diesem zweiten Ausführungsbeispiel vorzugsweise genau sieben Durchgangsöffnungen 210 und Gewindeöffnungen 14 vorhanden. Dies ist in Figur 12 sowie in den Figuren 14 bis 17 gut erkennbar.

Wie in Figur 13 erkennbar ist, weist der Werkzeughalter 1 wie im ersten Ausführungsbeispiel den schaftförmigen Grundkörper 10 auf, der vorzugsweise vom Zuführkanal 11 zur Zuführung des Kühlmittels durchsetzt ist. Im Gegensatz zum ersten Ausführungsbeispiel ist jedoch keine Verteilkammer und keine Verteilerkanäle vorhanden. Der Zuführkanal 11 führt bis zum geschlossenen zentralen Bereich des Grundkörpers 20. Das Kühlmittel strömt somit entlang dieser, dem Werkzeughalter zugewandten, Unterseite des zentralen Bereichs nach aussen und kühlt das Werkzeug 2. Vorzugsweise weist der Zuführkanal 11 in diesem Bereich einen vergrösserten Durchmesser auf als der restliche Bereich des Zuführkanals 11.

Wie in Figur 18 erkennbar ist, sind die Erhöhungen 230 und Nuten 231 des zweiten Kopplungsteils 23 und somit des Werkzeugs 2 gleich ausgebildet wie im ersten Ausführungsbeispiel, mit der Ausnahme, dass im Grund jeder Nut 231 die Durchgangsöffnungen 210 für die Befestigungselemente 3 vorhanden sind.

Wie im ersten Ausführungsbeispiel sind auch in diesem zweiten Beispiel die Erhöhungen 130 und Nuten 131 des ersten Kopplungsteils 13 und somit des Werkzeughalters 1 als identisches Gegenstück zum zweiten Kopplungsteil 23 ausgebildet. Es gilt somit das zum ersten Ausführungsbeispiel Gesagte. Eine Ausnahme bilden die erwähnten Gewindeöffnungen 14, die im zweiten Ausführungsbeispiel in den Erhöhungen 130 angeordnet sind.

Diese zweite Ausführungsform, die keine Zentrumsschraube aufweist, eignet sich insbesondere bei dünnen Werkzeugen, insbesondere bei dünnen Sägen.

In einer dritten, hier nicht dargestellten Ausführungsform sind die Gewindeöffnungen 14 in den Nuten 131 des ersten Kopplungsteils 13 angeordnet und die Durchgangsöffnungen 210 in den Erhöhungen 230 des zweiten Kopplungsteils 23.

In einer vierten, hier nicht dargestellten Ausführungsform sind im ersten Kopplungsteil 13 des Werkzeughalters 1 die Gewindeöffnungen 14 in den Erhöhungen 130 und zudem auch Verteilkanäle 12 vorhanden, die in den Nuten 131 münden. D.h. diese vierte Ausführungsform weist die Fixierung gemäss dem zweiten Ausführungsbeispiel und die Kühlung gemäss dem ersten Ausführungsbeispiel auf.

Die erfindungsgemässe Werkzeugeinheit weist eine optimierte Kopplung auf und ist gleichzeitig zeiteffizient und präzis herstellbar.

**BEZUGSZEICHENLISTE**

| | | | |
|---|---|---|---|
| 1 | Werkzeughalter | 230 | Erhöhung |
| 10 | Grundkörper | 231 | Nut |
| 11 | Zuführkanal | 232 | erste Flanke |
| 110 | Verteilkammer | 233 | zweite Flanke |
| 12 | Verteilkanal | 234 | Anschlagfläche |
| 13 | erstes Kopplungsteil | | |
| 130 | Erhöhung | | |
| 131 | Nut | | |
| 132 | erste Flanke | 3 | Befestigungselement |
| 133 | zweite Flanke | 30 | Schraubenstift |
| 134 | Anschlagfläche | 31 | Schraubenkopf |
| 135 | zurückversetzter Bereich | | |
| 14 | Gewindeöffnung | 4 | Schaft |
| 2 | Werkzeug | | |
| 20 | Grundkörper | B | Bearbeitungsrichtung |
| 21 | Durchgangsöffnung | D | Drehrichtung |
| 210 | Durchgangsöffnung | K | Kreismittelpunkt |
| 22 | Sägezahn | L | Längsachse |
| 23 | zweites Kopplungsteil | | |

## Patentansprüche

1. Werkzeugeinheit mit einem Werkzeughalter (1) und mit einem Werkzeug (2), das lösbar mit dem Werkzeughalter (1) verbindbar ist, wobei der Werkzeughalter (1) ein erstes Kopplungsteil (13) und das Werkzeug (2) ein zweites Kopplungsteil (23) aufweist, wobei das erste Kopplungsteil (13) und das zweite Kopplungsteil (23) in Eingriff miteinander bringbar sind, wobei das erste Kopplungsteil (13) und das zweite Kopplungsteil (23) kreisförmig angeordnete Erhöhungen (130, 230) und zwischen den Erhöhungen (130, 230) sich erstreckende Nuten (131, 231) aufweisen, die Anschlagflächen (134, 234) ausbilden, wobei die Erhöhungen (130, 230) einen Kreis definieren mit einem Kreismittelpunkt (K),
**dadurch gekennzeichnet,**
**dass** jeweils zwei Anschlagflächen (134) des ersten Kopplungsteils (13) eine gemeinsame erste Längsachse (L) definieren, die sich durch den Kreismittelpunkt (K) erstreckt, wobei die jeweils eine gemeinsame erste Längsachse (L) definierenden zwei Anschlagflächen (134) des ersten Kopplungsteils (13) gleich ausgerichtet sind und
**dass** jeweils zwei Anschlagflächen (234) des zweiten Kopplungsteils (23) eine gemeinsame zweite Längsachse (L) definieren, die sich durch den Kreismittelpunkt (K) erstreckt, wobei die jeweils eine gemeinsame zweite Längsachse (L) definierenden zwei Anschlagflächen (234) des zweiten Kopplungsteils (23) gleich ausgerichtet sind.

2. Werkzeugeinheit nach Anspruch 1, wobei die Anschlagflächen (134) des ersten Kopplungsteils (13) eine Flächenberührung mit den Anschlagflächen (234) des zweiten Kopplungsteils (23) ermöglichen.

3. Werkzeugeinheit nach einem der Ansprüche 1 oder 2, wobei eine ungerade Anzahl kreisförmig angeordneter Erhöhungen (130, 230) und Nuten (131, 231) auf jedem Kopplungsteil (13, 23) vorhanden ist.

4. Werkzeugeinheit nach einem der Ansprüche 1 bis 3, wobei mindestens, vorzugsweise genau, sieben kreisförmig angeordnete Erhöhungen (130, 230) und Nuten (131, 231) auf jedem Kopplungsteil (13, 23) vorhanden sind.

5. Werkzeugeinheit nach einem der Ansprüche 1 bis 4, wobei das erste und das zweite Kopplungsteil (13, 23) bezüglich der Breite der Erhöhungen (130, 230) und/oder der Breite der Nuten (131, 231) und/oder der Neigung der Anschlagsflächen (134, 234) gleich ausgebildet sind.

6. Werkzeugeinheit nach einem der Ansprüche 1 bis 5, wobei die jeweils eine gemeinsame erste bzw. zweite Längsachse (L) definierenden zwei Anschlagflächen (134, 234) jedes Kopplungsteils (13, 23) mit demselben Schleifwerkzeug auf derselben Schleifbahn bearbeitbar sind.

7. Werkzeugeinheit nach einem der Ansprüche 1 bis 6, wobei mindestens eine der Nuten (131) des ersten Kopplungsteils (13) eine Auslassöffnung eines Kühlmittelkanals (12) aufweist.

8. Werkzeugeinheit nach Anspruch 7, wobei mehrere Nuten (131), vorzugsweise alle Nuten (131), des ersten Kopplungsteils (13) derartige Auslassöffnungen aufweisen, wobei ihre Kühlmittelkanäle (12) in einen gemeinsamen Zuführkanal (11) im Innern des Werkzeughalters (1) münden.

9. Werkzeugeinheit nach einem der Ansprüche 1 bis 8, wobei das zweite Kopplungsteil (23) eine zentrale Durchgangsöffnung (21) zur Durchführung eines Befestigungselements (3) aufweist und wobei das erste Kopplungsteil (13) eine zentrale Gewindeöffnung (14) zur Aufnahme des Befestigungselements (3) aufweist.

10. Werkzeugeinheit nach einem der Ansprüche 1 bis 8, wobei mehrere, vorzugsweise alle Nuten (231) des zweiten Kopplungsteils (23) Durchlassöffnungen für Befestigungselemente (3) und mehrere, vorzugsweise alle Erhöhungen (130) des ersten Kopplungsteils (13) Gewindeöffnungen (14) zur Aufnahme der Befestigungselemente (3) aufweisen.

11. Werkzeugeinheit nach einem der Ansprüche 1 bis 9, wobei mehrere, vorzugsweise alle Erhöhungen (230) des zweiten Kopplungsteils (23) Durchlassöffnungen für Befestigungselemente (3) und mehrere, vorzugsweise alle Nuten (131) des ersten Kopplungsteils (13) Gewindeöffnungen (14) zur Aufnahme der Befestigungselemente (3) aufweisen.

12. Werkzeughalter (1), insbesondere einer Werkzeugeinheit nach einem der Ansprüche 1 bis 11, wobei der Werkzeughalter (1) ein erstes Kopplungsteil (13) aufweist, wobei das erste Kopplungsteil (13) kreisförmig angeordnete Erhöhungen (130) und zwischen den Erhöhungen (130) sich erstreckende Nuten (131) aufweist, die Anschlagflächen (134, 234) ausbilden, und wobei die Erhöhungen (130) einen Kreis definieren mit einem Kreismittelpunkt (K),
**dadurch gekennzeichnet,**
**dass** jeweils je zwei Anschlagflächen (134) des ersten Kopplungsteils (13) eine gemeinsame erste Längsachse (L) definieren, die sich durch den Kreismittelpunkt (K) erstreckt
und **dass** die jeweils eine gemeinsame erste Längsachse (L) definierenden zwei Anschlagflächen (134) gleich ausgerichtet sind.

13. Werkzeug (2), insbesondere einer Werkzeugeinheit nach einem der Ansprüche 1 bis 11, wobei das Werkzeug (2) ein zweites Kopplungsteil (23) aufweist, wobei das zweite Kopplungsteil (23) kreisförmig angeordnete Erhöhungen (230) und zwischen den Erhöhungen (230) sich erstreckende Nuten (231) aufweist, die die Anschlagflächen (234) ausbilden, und wobei die Erhöhungen (230) einen Kreis definieren mit einem Kreismittelpunkt (K),
**dadurch gekennzeichnet,**
**dass** jeweils je zwei Anschlagflächen (234) des zweiten Kopplungsteils (23) eine gemeinsame zweite Längsachse (L) definieren, die sich durch den Kreismittelpunkt (K) erstreckt und
**dass** die jeweils eine gemeinsame zweite Längsachse (L) definierenden zwei Anschlagflächen (234) gleich ausgerichtet sind.

14. Verfahren zur Herstellung eines Werkzeughalters (1) oder eines Werkzeugs (2) mit einem Kopplungsteil (13, 23), insbesondere eines Werkzeughalters (1) gemäss Anspruch 12 oder eines Werkzeugs (2) gemäss Anspruchs 13, wobei im Werkzeughalter (1) bzw. im Werkzeug (2) kreisförmig angeordnete Nuten (131, 231) eingebracht werden mit Flanken (132, 232), die mindestens über einen Teilbereich Anschlagflächen (134, 234) ausbilden, wobei zwecks Ausbildung der Anschlagflächen (134, 234) einer ersten Nut (131, 231) ein Bearbeitungswerkzeug entlang einer Längsachse (L) bewegt wird, die sich durch einen Kreismittelpunkt (K) erstreckt, wobei das Bearbeitungswerkzeug zwecks Ausbildung von Anschlagflächen (134, 234) in einer der ersten Nut (131, 231) benachbarten zweiten Nut (131, 231) um eine Drehachse gedreht wird, die senkrecht zur Längsachse (L) durch den Kreismittelpunkt (K) verläuft.
